Europäisches Patentamt

European Patent Office

Office européen des brevets

(19)

(11) Numéro de publication: **0 264 779 B1**

## (12) FASCICULE DE BREVET EUROPEEN

(45) Date de publication de fascicule du brevet:
**27.11.91**

(51) Int. Cl.⁵: **C04B 41/87, C23C 4/12**

(21) Numéro de dépôt: **87114936.5**

(22) Date de dépôt: **13.10.87**

(54) **Procédé de traitement superficiel de pièces céramiques à l'aide d'un laser.**

(30) Priorité: **16.10.86 FR 8614381**

(43) Date de publication de la demande:
**27.04.88 Bulletin 88/17**

(45) Mention de la délivrance du brevet:
**27.11.91 Bulletin 91/48**

(84) Etats contractants désignés:
**AT BE CH DE ES FR GB GR IT LI LU NL SE**

(56) Documents cités:
**BE-A- 510 038**
**FR-A- 2 575 185**
**GB-A- 1 201 911**
**LU-A- 83 120**
**LU-A- 84 971**

(73) Titulaire: **ALCATEL ALSTHOM COMPAGNIE GENERALE D'ELECTRICITE**
**54, rue La Boétie**
**F-75382 Paris Cédex 08(FR)**

(72) Inventeur: **Petitbon, Alain**
**23 rue des Menuets**
**F-78730 St Arnoult en Yvelines(FR)**

(74) Mandataire: **Weinmiller, Jürgen et al**
**Lennéstrasse 9 Postfach 24**
**W-8133 Feldafing(DE)**

Rank Xerox (UK) Business Services

## Description

La présente invention concerne les pièces constituées d'un matériau céramique à haute température de fusion tel que l'alumine et surtout la zircone. Elle vise à améliorer les qualités de telles pièces, notamment leurs qualités mécaniques. De telles pièces sont appelées ci-après pièces céramiques. Elles peuvent présenter la forme d'une pièce individuelle homogène ou être constituées d'une couche céramique déposée sur support d'un autre matériau.

L'utilisation de matériaux céramiques dans les moteurs thermiques ou les blindages est limitée par leur fragilité (tendance à la fissuration sous contrainte). Des progrès réalisés dans l'élaboration de ces matériaux ont permis une réduction importante des défauts internes. Il en résulte, que, si des efforts sont appliqués jusqu'au voisinage de la rupture à des pièces réalisées en des matériaux ainsi améliorés, les fractures éventuelles se développent à partir de défauts superficiels tels que pores et fissures, qui apparaissent plus difficiles à éliminer.

De tels pores et fissures peuvent présenter d'autres inconvénients par exemple celui de constituer des zones d'accrochages pour des molécules organiques qui peuvent être gênantes, notamment dans des processus biochimiques.

Pour supprimer ces pores et fissures en vue d'améliorer les qualités de la pièce céramique on connait un procédé de traitement par fusion superficielle à l'aide d'un laser.

Le laser $CO_2$, notamment, est un outil remarquable pour cicatriser ces défauts de surface. Il opère par fusion et refroidissement rapides, ce qui conduit à des microstructures très fines et homogènes avec malheureusement un réseau très dense de microfissures aléatoires qui dégrade les propriétés mécaniques du matériau. Ces microfissures ont par exemple une largeur de l'ordre de 2 micromètres et une longueur de l'ordre de 500 micromètres.

Ces microfissures se forment pendant le refroidissement et apparaissent dues notamment aux différences de dilatation et contrac tion entre la zône fondue et les zônes solides adjacentes et sous-jacente. Ces différences sont d'autant plus importantes que la température de fusion des céramiques est élevée et que ce sont des matériaux très sensibles au choc thermique, ce qui implique un traitement laser très rapide pour ne pas chauffer le coeur de la pièce. Ces microfissures présentent les inconvénients précédemment décrits à propos des pores et fissures, mais à des degrés modifiés.

Un tel procédé connu est décrit dans le document de brevet LU-A-83 120 - CENTRE DE RECHERCHES METALLURGIQUES. Ce document propose de déposer préalablement une couche d'un oxyde. Il semble envisager un oxyde différent de celui qui constitue le matériau à traiter.

De manière générale les solutions actuellement proposées pour résoudre ce problème de microfissures consistent en une modification chimique préalable de la surface de la pièce. Cette modification serait obtenue par le dépôt d'un matériau convenable sur la surface céramique à traiter. Un tel prétraitement risque de rendre le procédé difficilement reproductible et trop onéreux pour une mise en oeuvre industrielle.

On peut lire à ce sujet les articles suivants dans la revue" Matérials Science Research" volume 17 Plenum Press - New York 1984

* Laser Processing of Céramics
  J.R. Spann et al. US Naval Research Laboratory
* Microstructural Analysis of Rapidly Solidified Alumina
  J.P. Pollinger et G.L. Messing

The Pennsylvania State University

Les essais réalisés par le présent inventeur ont en particulier montré que des céramiques commerciales en alumine ou zircone ne supportent le traitement laser (c'est-à-dire ne présente pas ensuite de dégradations dues au choc thermique) que si les temps d'intéraction sont très courts (quelques centièmes de seconde, et au maximum 0,10 s dans certains cas).

Etant donné ces temps de réaction les solutions préconisées dans les publications précitées semblent, pour le moins, difficiles à mettre utilement en oeuvre, particulierement en ce qui concerne la formation de solutions solides, d'eutectiques, ou de nouveaux composés.

On connait par ailleurs, par le document de brevet LU-A-84 971 - CENTRE DE RECHERCHES METALLURGIQUES, un procédé de dépôt de matière réfractaire par projection d'une poudre chauffée, notamment pendant son trajet, par un rayon laser. Un tel procédé forme une couche supplémentaire qui augmente l'épaisseur de la pièce à laquelle il est appliqué et qui présente les pores et fissures précédemment mentionnées.

La présente invention a pour but de permettre d'obtenir, par traitement superficiel au laser, des pièces céramiques capables de résister à des efforts plus élevés que précédemment.

Elle a aussi pour but de diminuer les dimensions et/ou le nombre des microfissures dans la surface d'une pièce céramique traitée par laser, de manière à diminuer les inconvénients d'ordre mécanique et/ou physico-chimique liés à ces microfissures. Ces buts sont atteints par un procédé de traitement superficiel de pièces céramiques à l'aide d'un laser, ce procédé s'appliquant à une pièce à traiter constituée d'un matériau céramique de base et présentant des pores et/ou fissures superficielles, ce procédé comportant le balayage d'au moins une partie de la surface de la pièce à traiter par une zone de fusion dans laquelle la température est portée localement au-dessus de la température de fusion de ce matériau par un faisceau laser de chauffage, de manière que, en chaque point de la surface traitée, une fusion et un refroidissement d'une couche superficielle crée dans cette couche une microstructure plus fine et/ou plus homogène que précédemment,

- ce procédé étant caractérisé par le fait qu'il consiste en une implantation au laser comportant une projection d'une poudre céramique d'apport sur la pièce à traiter dans le faisceau laser de chauffage, de manière que cette poudre d'apport arrive fondue dans ladite zone de fusion, le débit de cette poudre étant choisi suffisamment grand pour apporter une quantité de matériau céramique d'apport qui permettrait, à l'état solide, de remplir au moins 50 % du volume des pores et fissures superficielles initiales du matériau de base, de manière à éviter au moins partiellement la formation de microfissures de retrait au refroidissement, ce débit étant choisi en même temps suffisamment petit pour que la puissance calorifique absorbée par la fusion de cette poudre soit inférieure à celle absorbée par la fusion de la couche superficielle fondue dudit matériau de base de manière que cette poudre fondue s'intègre de manière homogène à ce matériau de base sans créer de surépaisseur sensible.

En ce qui concerne des exemples de mise en oeuvre préférée de l'invention référence est faite aux revendications secondaires.

Il apparaît que selon l'invention on réduit les microfissures (leur élimination totale n'est pas souhaitable, la présence de quelques microfissures étant susceptible d'augmenter la ténacité du matériau) par implantation au laser c'est-à-dire par projection dans le faisceau laser d'un petit débit d'une poudre céramique de telle sorte qu'elle arrive fondue sur la surface à traiter et compense, au moins pour partie, le retrait lié au comblement des pores que la surface présentait avant le traitement, sans créer de surépaisseur sensible.

La matériau d'apport peut être de même nature ou de nature différente de celui de la pièce à traiter. Non seulement son adjonction pendant la fusion limite le retrait consécutif, mais il peut aussi diminuer les coefficients de dilatation et contraction.

Cet apport peut aussi contribuer à mettre la surface en compression par rapport au coeur de la pièce ce qui limitera la propagation des fissures formées sous contrainte.

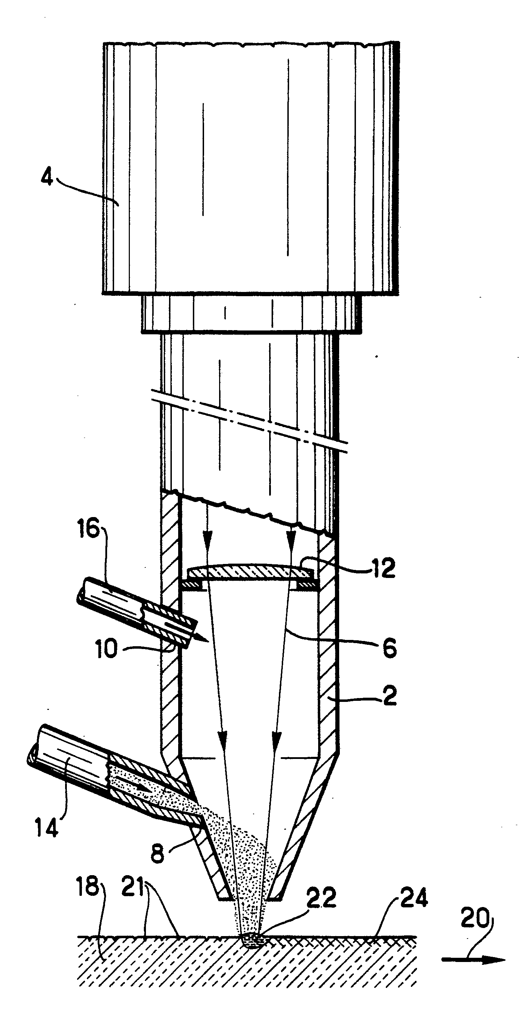

A l'aide de la figure schématique ci-jointe on va décrire plus particulièrement ci-après, à titre d'exemple non limitatif, comment la présente invention peut être mise en oeuvre dans le cadre de l'exposé qui en a été donné ci-dessus. Le mode de mise en oeuvre décrit présente les dispositions mentionnées ci-dessus comme avantageuses selon la présente invention. Il doit être compris que les éléments mentionnés peuvent être remplacés par d'autres éléments assurant les mêmes fonctions techniques.

La figure unique représente une vue en coupe partielle d'un dispositif de mise en oeuvre du procédé selon l'invention.

Conformément à cette figure ledit gaz porteur entraînant ladite poudre d'apport est introduit sous pression dans une buse de sortie 2 d'un laser 4 produisant ledit faisceau de chauffage 6. La zone 8 de cette introduction est située en aval, par référence à ce faisceau, d'une zone 10 d'introduction d'un gaz de balayage et de protection de fenêtre. Cette dernière zone est située elle-même en aval d'une fenêtre de sortie 12 de ce laser occupant une section de cette buse de sortie.

Ce dispositif est analogue à celui qui est utilisé pour le dépôt d'une couche céramique par laser. Mais entre autres différences le débit de poudre d'apport est beaucoup plus faible selon l'invention que pour le dépôt d'une telle couche, et l'épaisseur de la pièce ne change pas.

Dans le dispositif représenté la fenêtre de sortie du laser est constituée par la lentille de focalisation 12 du faisceau 6 formé par le laser à gaz carbonique 4.

L'introduction du gaz porteur et du gaz de balayage dans la buse 2 se font par un injecteur de poudre 14 et une tubulure 16.

Le sens du déplacement de la pièce céramique à traiter 18 est représenté par une flèche 20, le laser 4 étant par exemple fixe. Des fissures 21 sont très schématiquement représentée à la surface de cette pièce. L'impact du faisceau laser créé sur cette pièce une zone de fusion 22. La couche solidifiée après fusion est représentée en 24.

L'alimentation en poudre est assurée par un distributeur de poudre (non représenté) qui reçoit pour cela une poudre sphéroïdisée avec une répartition granulométrique étroite.

Pour des céramiques comme l'alumine ou la zircone, la spheroïdisation s'effectue par atomisation d'une barbotine (procédé appelé en anglais : "spray-drying"), calcination pour éliminer les liants et tamisage pour obtenir une bonne répartition granulométrique, (typiquement de 50 à 100 micromètres).

Pour obtenir la fusion simultanée de la poudre et de la surface à traiter sans que le choc thermique dégrade la pièce à traiter, les paramètres de fonctionnement peuvent se situer dans les plages suivantes :

Puissance laser 6-12 kW/cm²

Densité d'énergie laser 0,2-1 kJ/cm²

Vitesse de balayage 1-20 cm/s

Débit de poudre 1-5 g/mn, c'est-à-dire 5-25 mg/cm² ceci pour la projection d'alumine ou de zircone sur des pièces en alumine, zircone, nitrure de silicium ou Si AlON, mullite, cordiérite.

On peut donner en premier exemple le traitement de zircone partiellement stabilisé (PSZ) avec projection d'alumine alpha atomisée. On utilise un laser $CO_2$ continu à cavité stable de 3kW, dont le faisceau est partiellement focalisé pour fournir une tache de 4 mm de diamètre avec une répartition énergétique quasi-uniforme. La pièce en zircone (plaque 50 x 50 mm en zircone de la marque Desmarquest stabilisée à la magnésie) est fixée sur une table X, Y, Z à commande numérique. Le distributeur de poudre est réglé sur 2 ou 3 g/mn d'alumine atomisée et tamisée entre 50 et 150 micromètres. La puissance laser est de 1,5 kW et la vitesse de balayage de 5 cm/s (temps d'interaction 0,08s).

On obtient les résultats suivants :
- Microstructure polyphasée de 1 à 5 micromètres (mélange intime de $ZrO_2$ cubique et quadratique, $Al_2O_3$ alpha et delta).
- Microfissures limitées et orientées perpendiculairement à l'axe de défilement.
- Augmentation de la dureté Vickers (+ 40%) et de la ténacité par rapport aux zones non traitées (la ténacité est difficile à mesurer dans les zones non traitées à cause des nombreux défauts y existant).

A titre de comparaison, la fusion du même échantillon sans projection de poudre se fait avec un faisceau de 800 W (toujours 4 mm de diamètre) et une vitesse de balayage de 10 cm/s. On obtient :
- microstructure monophasée de 1 à 2 micromètres ($ZrO_2$ cubique)
- Nombreuses microfissures aléatoires
- Baisse de la dureté Vickers (- 50 %) et de la ténacité (non mesurable) par rapport aux zones non traitées.

Un deuxième exemple concerne le traitement d'une couche de zircone d'épaisseur comprise entre 0,5 et 3 mm, stabilisée à l'yttrium (YSZ). Cette couche a été déposée par projection à la torche à Plasma sur de la fonte avec une sous-couche en NiCrAlY.

Avant le traitement laser la couche présentait 10 % de porosité et 6 GPa de dureté.

Après traitement laser avec projection d'alumine selon l'invention la porosité était nulle et la dureté valait entre 14 et 15 GPa.

On obtient ainsi une couche étanche en surface, résistant à la corrosion, à l'abrasion et au choc thermique. De telles couches peuvent constituer des barrières thermiques ou des couches anti-usure dans des moteurs Diesel ou des turbines.

## Revendications

1. Procédé de traitement superficiel de pièces céramiques à l'aide d'un laser, ce procédé s'appliquant à une pièce à traiter constituée d'un matériau céramique de base et présentant des pores et/ou fissures superficielles, ce procédé comportant le balayage d'au moins une partie de la surface de la pièce à traiter par une zone de fusion dans laquelle la température est portée localement au-dessus de la température de fusion de ce matériau par un faisceau laser de chauffage, de manière que,en chaque point de la surface traitée, une fusion et un refroidissement d'une couche superficielle crée dans cette couche une microstructure plus fine et/ou plus homogène que précédemment,
   - ce procédé étant caractérisé par le fait qu'il consiste en une implantation au laser comportant une projection d'une poudre céramique d'apport sur la pièce à traiter dans le faisceau laser de chauffage, de manière que cette poudre d'apport arrive fondue dans ladite zone de fusion, le débit de cette poudre étant choisi suffisamment grand pour apporter une quantité de matériau céramique d'apport qui permettrait, à l'état solide, de remplir au moins 50 % du volume des pores et fissures superficielles initiales du matériau de base, de manière à éviter au moins partiellement la formation de microfissures de retrait au refroidissement, ce débit étant choisi en même temps suffisamment petit pour que la puissance calorifique absorbée par la fusion de cette poudre soit inférieure à celle absorbée par la fusion de la couche superficielle fondue dudit matériau de base, de manière que cette poudre fondue s'intègre de manière homogène à ce matériau de base sans créer de surépaisseur sensible.

2. Procédé selon la revendication 1 caractérisé par le fait que le débit de la dite poudre d'apport est tel que la fusion de cette poudre absorbe entre 1 % et 40 % de la puissance utile dudit faisceau de chauffage.

3. Procédé selon la revendication 1 caractérisé par le fait que le débit de ladite poudre d'apport est choisi entre 5 et 125 mg par kilojoule de chaleur apportée par ledit faisceau de chauffage.

4. Procédé selon la revendication 3 caractérisé par le fait que le débit de ladite poudre d'apport est choisi entre 10 et 60 mg par kilojoule de chaleur apportée par ledit faisceau de chauffage.

5. Procédé selon la revendication 1 caractérisé par le fait que ladite poudre d'apport est une poudre préalablement sphéroïdisée.

6. Procédé selon la revendication 1 caractérisé par le fait que ladite poudre d'apport est une poudre d'alumine et/ou de zircone lorsque ledit matériau de base est la zircone.

7. Procédé selon la revendication 6 caractérisé par le fait que les grains de ladite poudre d'apport d'alumine et/ou de zircone ont des diamètres compris entre 50 et 150 micromètres environ.

8. Procédé selon la revendication 1 caractérisé par le fait que ladite poudre d'apport est projetée en suspension dans un gaz porteur.

9. Procédé selon la revendication 8 caractérisé par le fait que ledit gaz porteur entraînant ladite poudre d'apport est introduit sous pression dans une buse de sortie (2) d'un laser (4) produisant ledit faisceau de chauffage (6), la zone (8) de cette introduction étant située en aval, par référence à ce faisceau, d'une zone (10) d'introduction d'un gaz de balayage et de protection de fenêtre, cette zone étant située elle-même en aval d'une fenêtre de sortie (12) de ce laser occupant une section de cette buse de sortie.

## Claims

1. A method of surface treating ceramic workpieces by means of a laser, the method being applicable to a workpiece to be treated constituted by a base ceramic material including surface cracks and/or pores, the method including the step of progressively covering at least a portion of the surface of the workpiece to be treated with a melt zone in which the temperature is locally raised above the melting temperature of the material, in such a manner that, at each point of the treated surface, the melting and subsequent cooling of a surface layer give rise to a microstructure in said layer which is finer and/or more homogeneous than before,

   - said method being characterized in that it consists in a laser implantation including projecting a ceramic powder onto the workpiece to be treated in the heating laser beam, in such a manner that the projected powder arrives in the molten state in said melt zone, with the throughput of said powder being chosen to be high enough to add on a sufficient quantity of ceramic material to fill at least 50% by volume of the initial surface cracks and pores in the base material when in the solid state, thereby at least partially avoiding the formation of shrinkage microcracks on cooling, and said throughput also being chosen to be small enough for the heating power absorbed by the melting of said powder to be less than the heating power absorbed by melting the molten surface layer of said base material, thereby ensuring that said molten powder is integrated homogeneously in the base material without a substantial excessive thickness.

2. A method according to claim 1, characterized in that the throughput of said projected powder is such that the melting of said powder absorbs between 1% and 40% of the available power of said heating laser beam.

3. A method according to claim, 1 characterized in that the throughput of said projected powder is chosen to be between 5 mg and 125 mg per kilojoule of heat conveyed by said heating laser beam.

4. A method according to claim 3, characterized in that the throughput of said projected powder is chosen to be between 10 mg and 60 mg per kilojoule of the heat conveyed by said heating laser beam.

5. A method according to claim 1, characterized in that said projected powder is a powder which has previously been spheroidized.

6. A method according to claim, 1, characterized in that when said base material is zirconia, said projected powder is alumina powder and/or zirconia powder.

7. A method according to claim 6, characterized in that the grains of said projected alumina powder and/or zirconia powder have diameters lying between about 50 micrometers and 150 micrometers.

8. A method according to claim 1, characterized in that said projected powder is projected in suspension in a carrier gas.

9. A method according to claim 8, characterized in that said carrier gas entraining said projected powder is injected under pressure into the outlet nozzle (2) of a laser (4) producing said heating beam (6), with injection taking place in a zone (8) which is downstream in the beam direction from a zone (10) in which a sweeping and window-protecting gas is injected, said zone being itself located downstream from an outlet window (12) from said laser occupying a section of said outlet nozzle.

**Patentansprüche**

1. Verfahren zur Oberflächenbehandlung keramischer Bauteile mit Hilfe eines Lasers, wobei sich das Verfahren auf ein zu behandelndes Bauteil bezieht, das aus einem keramischen Basismaterial besteht und Oberflächenporen und -risse aufweist, und wobei das Verfahren das fortschreitende überstreichen mindestens eines Abschnitts der Oberfläche des zu behandelnden Bauteils mit einer Schmelzzone umfaßt, in der durch einen Laserwärmestrahl die Temperatur örtlich über die Schmelztemperatur des genannten Materials hinaus erhöht wird, derart, daß in jedem Punkt der behandelten Oberfläche ein Schmelzen und ein Abkühlen einer Oberflächenschicht in dieser Schicht eine noch feinere und/oder noch homogenere Mikrostruktur erzeugt als die zuvor vorhandene, dadurch gekennzeichnet, daß das Verfahren in einer Laserimplantation besteht und ein Aufsprühen eines keramischen Auftragspulvers im Laserwärmestrahl auf das zu behandelnde Bauteil umfaßt, derart, daß das Auftragspulver geschmolzen in der Schmelzzone ankommt, wobei die Menge des Pulvers ausreichend groß gewählt ist, um eine Menge an keramischem Auftragsmaterial aufzubringen, die es ermöglichen würde, im festen Zustand mindestens 50% des Volumens der anfänglichen Oberflächenporen und -risse des Basismaterials zu füllen, so daß mindestens teilweise die Bildung von Schrumpfungsrissen beim Abkühlen verhindert wird, wobei die Menge gleichzeitig ausreichend gering gewählt wird, um die durch die Schmelze des Pulvers absorbierte Wärmeleistung kleiner als die durch die Schmelze der geschmolzenen Oberflächenschicht des Basismaterials absorbierte Wärmeleistung zu halten, derart, daß sich das geschmolzene Pulver homogen in das Basimaterial integriert, ohne eine spürbare Überdicke zu erzeugen.

2. Verfahren nach Anspruch 1, dadurch gekennzeichnet, daß die Menge des Auftragspulvers so bemessen ist, daß die Schmelze des Pulvers zwischen 1% und 40% der Nutzleistung des Erwärmungsstrahls absorbiert.

3. Verfahren nach Anspruch 1, dadurch gekennzeichnet, daß die Menge des Auftragspulvers zwischen 5 und 125 mg je Kilojoule der vom Erwärmungsstrahl gelieferten Wärmemenge beträgt.

4. Verfahren nach Anspruch 3, dadurch gekennzeichnet, daß die Menge des Auftragspulvers zwischen 10 und 60 mg je Kilojoule der vom Erwärmungsstrahl gelieferten Wärmemenge beträgt.

5. Verfahren nach Anspruch 1, dadurch gekennzeichnet, daß das Auftragspulver ein zuvor in kugelförmiges Granulat gebrachtes Pulver ist.

6. Verfahren nach Anspruch 1, dadurch gekennzeichnet, daß das Auftragspulver ein Aluminium- und/oder Zirkonpulver ist, wenn das Basismaterisal Zirkon ist.

7. Verfahren nach Anspruch 6, dadurch gekennzeichnet, daß die Körner des Aluminium- und/oder Zirkonauftragspulvers Durchmesser zwischen 50 und 150 Mikrometer besitzt.

8. Verfahren nach Anspruch 1, dadurch gekennzeichnet, daß das Auftragspulver in einem Trägergas suspendiert aufgesprüht wird.

9. Verfahren nach Anspruch 8, dadurch gekennzeichnet, daß das das Auftragspulver mitreißende Trägergas unter Druck in eine Austrittsdüse (2) eines den Erwärmungsstrahl (6) erzeugenden Lasers (4) eingeleitet wird, wobei die Einleitungszone (8) bezogen auf den Strahl auf eine Einführungszone (10) eines überstreich- und Schutzgases eines Fensters folgt und sich diese Zone in Strahlrichtung an ein Austrittsfenster (12) des Lasers anschließt, das einen Abschnitt dieser Austrittsdüse einnimmt.